# EUROPEAN PATENT APPLICATION

(11) **EP 2 560 430 A1**
(43) Date of publication of application: **20.02.2013**
(21) Application number: 11768390.4
(22) Date of filing: 14.03.2011
(51) Int. Cl.: H04W 24/10, H04W 28/24

(54) **METHOD AND SYSTEM FOR OBTAINING NETWORK LOAD**

(30) Priority: 15.04.2010 CN 201010149187
(71) Applicant: ZTE Corporation, Shenzhen, Guangdong 518057 (CN)
(72) Inventor: ZHOU, Xiaoyun, Shenzhen, Guangdong 518057 (CN); ZONG, Zaifeng, Shenzhen, Guangdong 518057 (CN)
(74) Representative: Zinkler, Franz
(86) International application number: PCT/CN2011/071784
(87) International publication number: WO 2011/127778

(57) **Abstract**

The disclosure provides a method and system for obtaining network loads, comprising: a Load Detection Function (LDF) detects the user plane data of User Equipment (UE) and reports the load condition of a network which the UE currently accesses to a policy server according to the detected congestion indication. With the method in the disclosure, the policy server obtains the network loads condition, so that the quality of service is guaranteed.

## Description

### Field of the Invention

The disclosure relates to the policy decision technology in a mobile communication system, and in particular to a method and a system for obtaining network loads.

### Background of the Invention

Since the Third Generation Partnership Plan Release 7 (3GPP Release 7) standard system, the policy and charging functions have been implemented by the Policy and Charging Control (PCC) frame. The PCC architecture is a function frame that can be applied to a plurality of access technologies. For example, the PCC architecture may be applied to the Universal Mobile Telecommunications System (UMTS) Terrestrial Radio Access Network (UTRAN) of UMTS, Global System for Mobile Communication (GSM)/Enhanced Data Rates for GSM Evolution (EDGE) radio access network, Interworking WLAN (I-WLAN) and Evolved Packet System (EPS) etc.

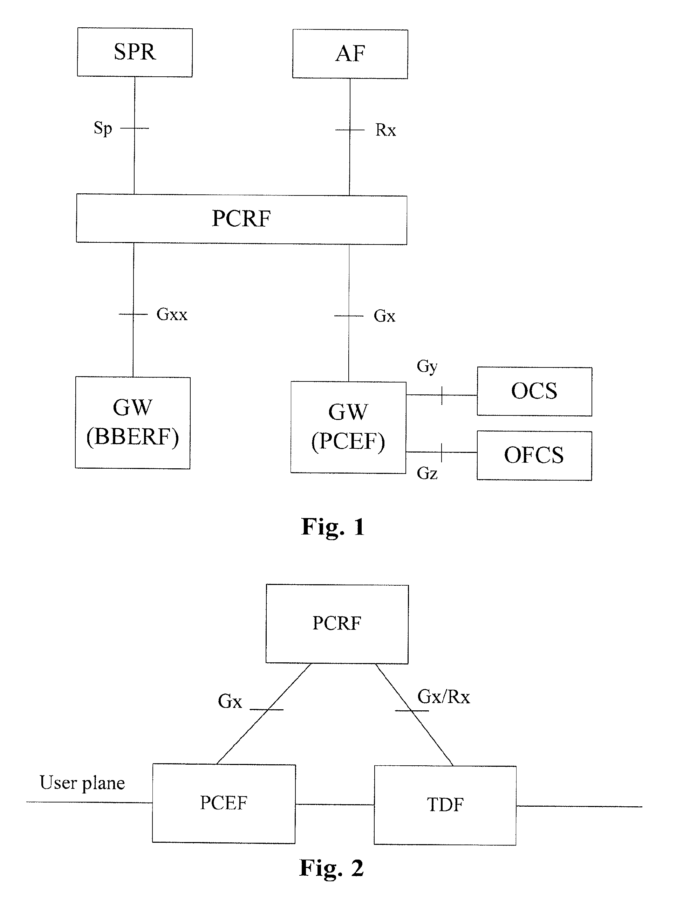

Fig. 1 is a structural diagram of related PCC. The PCC mainly implements two functions of policy control and charging. As shown in Fig. 1, the logic functional entities in the PCC architecture and the function of the interfaces thereof are described below.

An Application Function (AF) (entity) is configured to provide an access point for service application. The network resources used for the service application require dynamical policy control. When parameter negotiation is performed in the service plane, the AF delivers the relative service information to a Policy and Charging Rules Function (PCRF) (entity). If the service information is consistent with the policy of the PCRF, the PCRF accepts the negotiation; otherwise, the PCRF refuses the negotiation and provides service parameters that are acceptable by the PCRF when providing a feedback to the AF. Subsequently, the AF may feed back the obtained service parameters that are acceptable by the PCRF to a User Equipment (UE). In the above, the interface between the AF and the PCRF is an Rx interface. A Proxy Call Session Control Function (P-CSCF) (entity) in an IP Multimedia Subsystem (IMS) may be regarded as an AF.

The PCRF, as the core functional entity of the PCC, is configured to formulate policy decision and charging rules. The PCRF provides network control rules based on service data streams. These network control rules comprise detection of service data streams, gating control, Quality of Service (QoS) control and charging rules based on data streams etc. The PCRF sends the formulated policy and charging rules to a Policy and Control Enforcement Function (PCEF) (entity) to execute the rules. Simultaneously, the PCRF also needs to guarantee the consistency of these rules and the subscription information of the user. In this case, the basis for the PCRF to formulate the policy and charging rules are: information that is obtained from the AF and is related to services, user policy and charging control subscription information that is obtained from a user Subscription Profile Repository (SPR) and is related to the policy control and charging, and information that is obtained from the PCEF through a Gx interface and is related to bearer network.

The PCEF, generally located in a Gateway (GW), is configured to execute the policy and charging rules formulated by the PCRF in the bearer plane. The PCEF detects the service data streams according to the service data stream filter in the rules sent by the PCRF, and further executes the policy and charging rules formulated by the PCRF on these service data streams. When the bearer is established, the PCEF performs QoS authorization according to the rules sent by the PCRF, and performs gating control according to the execution of the AF. Simultaneously, the PCEF reports events occurred in the bearer network according to the event triggers subscribed to by the PCRF. The PCEF executes the corresponding service data stream charging operation according to the charging rules sent by the PCRF, wherein the charging may be online charging, and also may be offline charging. In a case of online charging, the PCEF needs to perform credit management together with a Online Charging System (OCS). In a case of offline charging, the PCEF and an Offline Charging System (OFCS) exchange relative charging information. The interface between the PCEF and the PCRF is a Gx interface, the interface between the PCEF and the OCS is a Gy interface, and the interface between the PCEF and the OFCS is a Gz interface. Generally, the PCEF is set in the gateway of the network, such as a Packet Data Network Gateway (PDN-GW) in the EPS, a Gateway GPRS Support Node (GGSN) in the General Packet Radio Service (GPRS), and a Packet Data Gateway (PDG) in the Interworking WLAN (I-WLAN) etc.

A Bearer Binding and Event Reporting Function (BBERF) (entity) is generally located in the access network gateway. When the UE accesses to the EPS through the E-UTRAN and the Proxy Mobile Internet Protocol Version 6 (PMIPv6) protocol is adopted between the Serving Gateway (S-GW) and the P-GW, the BBERF exists in the S-GW. When the UE accesses through the trusted non-3GPP access network, the BBERF also exists in the trusted non-3GPP access gateway.

The user policy and charging control subscription information related to the policy control and charging is stored in the SPR. The interface between the SPR and the PCRF is an Sp interface.

The OCS and the PCEF complete control and management of user credit under the online charging mode together.

The OFCS and the PCEF complete charging operation under the offline charging mode together.

In addition, in the related technologies, to enable the PCRF to perform policy control for non-session services (that is, there is no AF to provide service information), a Traffic Detection Function (TDF) (entity) is also introduced in the related technologies to detect the service information and report it to the PCRF. Fig. 2 is a diagram of the related PCC enhanced architecture with the TDF. The TDF interacts with the PCRF through the Gx or Rx interface. The TDF may be integrated with the PCEF, and also may be set separately from the PCEF.

The UE establishes a Packet Data Network (PDN) connection, which is also called as IP-Connectivity Access Network (IP-CAN) session, through a radio communication system (for example, GRPS, UMTS, EPS), to implement the access to IP services provided by the operator or the third party. The PCRF makes policy decision according to the QoS requirement of the service accessed by the user, and initiates a resource reservation process in the radio communication system to guarantee the QoS for service access.

To guarantee the QoS, the PCRF needs to know the loads of the network and then makes policy decision. In this way, only when congestion occurs in the network, the PCRF will refuse requests of certain services or decrease the QoS to transmit this service, so as to avoid further aggravating loads of the network when congestion occurs in the network and to avoid further deteriorating of the QoS. However, at present, there is no specific implementation solution about how the PCRF obtains network loads in the related technologies.

### Summary of the Invention

The disclosure provides a method and a system for obtaining network loads, which enable the policy server to know the load condition of the network, thus to guarantee the QoS.

The technical solution of the disclosure is implemented as follows.

A method for obtaining network loads is provided, comprising:
a Load Detection Function (LDF) detecting user plane data of a user equipment; and
the LDF reporting load condition of a radio base station which the user equipment currently accesses to a policy server according to a detected congestion indication.

Before the above steps, the method further comprises:
a base station carrying a congestion indication indicating that congestion occurs in the base station in user data to transmit the congestion indication to the LDF through a gateway, or the user equipment sending a congestion indication indicating that congestion occurs in the base station to the LDF as user data; and
the LDF detecting the user plane data of the user equipment comprises: the LDF analyzing the received user data to know whether the congestion indication is carried therein.

The LDF reporting load condition of a network which the user equipment currently accesses to the policy server comprises:
the LDF sending a load reporting message to the policy server and carrying the congestion indication in the load reporting message; and
if the congestion indication is marked as uplink congestion, the policy server knowing that the load condition of the network which the user equipment currently accesses is that: congestion occurs in uplink of the base station which the user equipment currently accesses; if the congestion indication is marked as downlink congestion, the policy server knowing that the load condition of the network which the user equipment currently accesses is that: congestion occurs in downlink of the base station which the user equipment currently accesses; and if the congestion indication is marked as congestion both in uplink and downlink, the policy server knowing that the load condition of the network which the user equipment currently accesses is that: congestion occurs both in uplink and downlink of the base station which the user equipment currently accesses.

The congestion indication is carried in data payload, and/or internal IP packet header, and/or GPRS Tunnel Protocol (GTP) header, and/or external IP packet header of the user data.

The method further comprises: when the congestion indication changes, the LDF reporting the change of the load condition of the radio base station which the user equipment currently accesses to the policy server.

The LDF reporting the change of the load condition of the radio base station which the user equipment currently accesses to the policy server comprises:
the LDF sending a load reporting message to the policy server and carrying a congestion release indication in the load reporting message; and
if the congestion release indication is marked as uplink congestion release, the policy server knowing that the load condition of a network which the user equipment currently accesses is that: the uplink congestion in the base station which the user equipment currently accesses is released; if the congestion release indication is marked as downlink congestion release, the policy server knows that the load condition of a network which the user equipment currently accesses is that: the downlink congestion in the base station which the user equipment currently accesses is released; and if the congestion release indication is marked as congestion release both in uplink and downlink, the policy server knows that the load condition of a network which the user equipment currently accesses is that: both the uplink and downlink congestion in the base station which the user equipment currently accesses are released.

The method further comprises: after knowing the load condition of the radio base station which the user equipment currently accesses, the policy server feeding back an acknowledgement message to the LDF.

The method further comprises: the user equipment sending a signaling to an corresponding end of communication indicating that congestion occurs in downlink of the radio base station which the user equipment currently accesses; and
the LDF judging that congestion occurs in downlink of the radio base station which the user equipment currently accesses according to a signaling of internal IP packet data payload as a congestion indication, and notifying a Policy and Charging Rules Function (PCRF) that congestion occurs in downlink of the radio base station which the user equipment currently accesses.

The sent signaling indicating that congestion occurs in downlink of the radio base station which the user equipment currently accesses is a signaling notification of Transmission Control Protocol (TCP), or Stream Control Transmission Protocol (SCTP) or Realtime Transport Control Protocol (RTCP).

When the LDF reports a congestion indication or a congestion release indication to the policy server,
if the LDF is located in a Policy and Control Enforcement Function (PCEF), or if the LDF is integrated with the PCEF, then when the LDF reports the congestion indication to a PCRF, the PCEF simultaneously carries base station identifier information of the radio base station which the user equipment currently accesses; and
when the LDF reports the congestion release indication to the PCRF, the LDF carries the identifier information of the radio base station which the user equipment currently accesses.

The LDF is located in a PCEF as a function enhancement of the PCEF; or, the LDF is located in a Traffic Detection Function (TDF) as a function enhancement of the TDF; or, the LDF is an independent functional entity.

A system for obtaining network loads is provided, comprising: a user equipment, an LDF and a policy server, wherein
the LDF is configured to detect user plane data of the user equipment, and report load condition of a radio base station which the user equipment currently accesses to a policy server according to a detected congestion indication; and
the policy server is configured to receive information reported by the LDF to know the load condition of the radio base station which the user equipment currently accesses.

The LDF is further configured to report the change of the load condition of the radio base station which the user equipment currently accesses to the policy server.

The policy server is further configured to, after knowing the load condition of the radio base station which the user equipment currently accesses, feed back an acknowledgement message to the LDF.

The LDF is further configured to, when reporting the load condition of the radio base station which the user equipment currently accesses or the change of the load condition of the radio base station which the user equipment currently accesses to the policy server, simultaneously report base station identifier information of the radio base station which the user equipment currently accesses.

The system further comprises a base station and a gateway, wherein
the base station is configured to, during the transmission of service data from a user, carry a congestion indication in user data indicating that congestion occurs in the base station, and transmit the congestion indication to the LDF through the gateway; and
the gateway is configured to transmit and process the user data between the base station and the LDF.

In an Evolved Packet System (EPS), the gateway comprises a Serving Gateway (S-GW) and a Packet Data Gateway (P-GW), and the policy server is a Policy and Charging Rules Function (PCRF); and
in a Universal Mobile Telecommunications System (UMTS), the gateway comprises a Serving GPRS Support Node (SGSN) and a Gateway GPRS Support Node (GGSN), and the policy server is a PCRF.

The user equipment is further configured to send a signaling indicating that congestion occurs in downlink of the radio base station which the user equipment currently accesses to an corresponding end of communication; and
the LDF judges that congestion occurs in downlink of the radio base station which the user equipment currently accesses according to a signaling of internal IP packet data payload as a congestion indication, and notifies a PCRF that congestion occurs in downlink of the radio base station which the user equipment currently accesses.

The sent signaling indicating that congestion occurs in downlink of the radio base station which the user equipment currently accesses, is a signaling notification of Transmission Control Protocol (TCP), or Stream Control Transmission Protocol (SCTP) or Realtime Transport Control Protocol (RTCP).

The LDF is located in a Policy and Control Enforcement Function (PCEF) as a function enhancement of the PCEF; or, the LDF is located in a Traffic Detection Function (TDF) as a function enhancement of the TDF; or, the LDF is an independent functional entity.

From the technical solution provided in the disclosure, the LDF detects the user plane data of the UE, and reports the load condition of the network which the UE currently accesses to a policy server according to the detected congestion indication. Through the method in the disclosure, the policy server knows the load condition of the network, so that the QoS is guaranteed.

### Brief Description of the Drawings

Fig. 1 is a structural diagram of the related PCC;
Fig. 2 is a diagram of the related PCC enhanced architecture with the TDF;
Fig. 3 is a diagram of transmission of uplink data sent by the UE, taking EPS as example;
Fig. 4 is a format diagram of packet sent by the eNodeB to the S-GW and by the S-GW to the P-GW, when the user sends uplink IP packet in the EPS;
Fig. 5 is a flow diagram of the related ECN detection of downlink data;
Fig. 6 is an exemplary flow chart of the related ECN detection of uplink data;
Fig. 7 is an architecture diagram of a system for obtaining network loads according to the first embodiment of the disclosure;
Fig. 8 is an architecture diagram of a system for obtaining network loads according to the second embodiment of the disclosure;
Fig. 9 is a flow chart of a method for obtaining network loads according to the disclosure; and
Fig. 10 is a flow diagram of an embodiment of a method for obtaining network loads according to the disclosure.

### Detailed Description of the Embodiments

If the user needs to access the PDN services through a radio communication system, such as EPS, UMTS, GPRS or the like, a PDN connection (also called IP-CAN session) to the PDN has to be first established through the radio communication system. When the user needs to access a certain service, the network will establish a bearer with QoS guarantee, i.e., user plane, to transmit this service (that is, the network allocates the corresponding resources) according to information such as the attribute of the service. Only after the network establishes the bearer, the user may access the service.

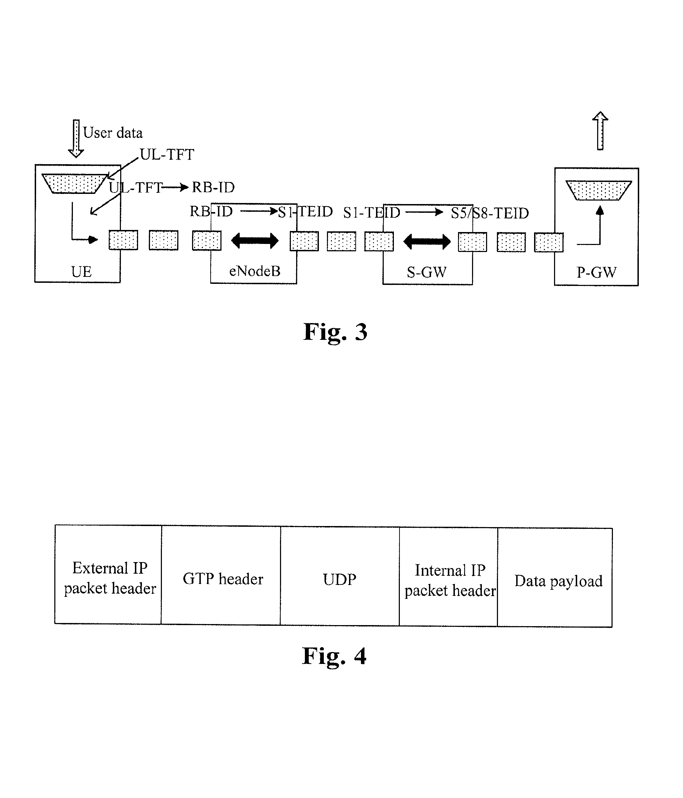

Fig. 3 is a diagram of transmission of uplink data sent by the UE, taking EPS as example. As shown in Fig. 3, when the UE sends an uplink IP packet to the PDN, according to an Uplink Traffic Filter Template (UL-TFT) installed in the UE in advance, the UE first filters the uplink IP packet to the bearer that is established by the network to transmit this service. Then, the UE encapsulates the user data according to the radio side protocol, identifies the bearer using Radio Bearer Identifier (RB-identifier, RB-ID for short), and then sends it to the eNodeB. The eNodeB decapsulates the IP packet, encapsulates it according to the GTP protocol, and identifies the GTP-U packet using the Tunnel Endpoint Identifier (S1-TEidentifier) corresponding to the RB-identifier (may be expressed as S1 GTP-U). The eNodeB then sends the S1 GTP-U packet to the S-GW, and the S-GW decapsulates the IP packet and continues to encapsulate it according to the GTP protocol. At this point, S5/S8-TEID corresponding to the S1-TEID is adopted to encapsulate the GTP-U packet (may be expressed as S5/S8 GTP-U). The S-GW sends the S5/S8 GTP-U packet to the P-GW; the P-GW decapsulates the IP packet and then performs routing according to the IP packet header of the IP packet to send it to the corresponding PDN.

Fig. 4 is a format diagram of packet sent by the eNodeB to the S-GW and by the S-GW to the P-GW, when the user sends uplink IP packet in the EPS. As shown in Fig. 4, this packet comprises the following contents.

A data payload is the service data to be sent by the UE and the signaling of the interaction between the UE and the corresponding end of communication, such as the signaling of TCP, SCTP, RTP/RTCP and Session Initial Protocol (SIP) etc.

A internal IP packet header is the header of the IP protocol. The destination address in the internal IP packet header is the IP address of the corresponding end of communication to which the data of the UE is to be sent. The source address is the IP address of the UE.

The data payload and the internal IP packet header form the IP packet to be sent by the UE.

The User Datagram Protocol (UDP) is the transport layer protocol of the GTP.

A GTP header is the header of the GTP protocol, and its contents comprises the TEID negotiated when the bearer is established. Between the eNodeB and the S-GW, TEID is the S1-TEID that is allocated by the S-GW when the bearer is established. Established by the S-GW and the P-GW, the TEID is the S5/S8-TEID that is allocated by the P-GW when the bearer is established.

An external IP packet header is the header of the IP protocol. Between the eNodeB and the S-GW, the destination address is the user plane IP address of the S-GW, and the source address is the user plane IP address of the eNodeB. Established by the S-GW and the P-GW, the destination address is the user plane IP address of the P-GW, and the source address is the user plane IP address of the S-GW.

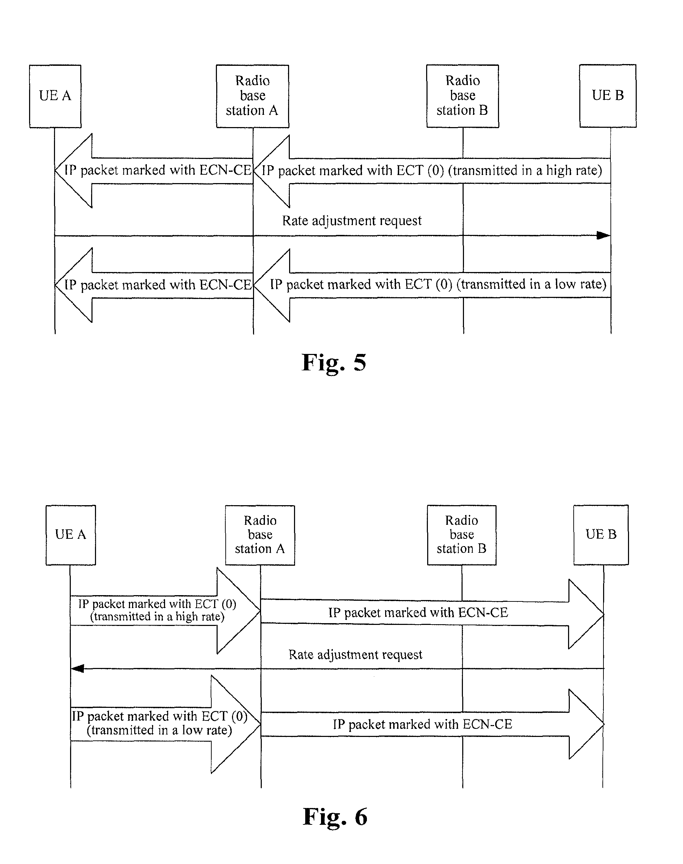

Fig. 5 and Fig. 6 show a method for both parties of communication to implement adjustment of transmission rate according to the network congestion condition through an Explicit Congestion Notification (ECN) mechanism in the related arts. First, both the UE and the radio base station support the ECN mechanism. At present, there are many protocols that support the feedback mechanism of the ECN, such as TCP, SCTP, RTP/RTCP etc.

Fig. 5 is a flow diagram of ECN detection of downlink data in the related technologies. As shown in Fig. 5, UE B sends data to UE A in a high rate. The IP packet header ECN flag bit of the data is set to be ECT(0) (i.e., no congestion). When the packet passes through radio base station A, if the radio base station A is congested, the radio base station A sets the ECN flag bit of the packet to be ECN-CE (i.e., congestion occurs). After UE A detects the ECN-CE value, it judges that congestion occurs in the downlink path of the base station, and sends a rate adjustment request message of decreasing the rate to UE B. After receiving the rate adjustment request message, UE B will send data in a low rate. In this way, the load of the radio base station is decreased, loss of packet will not occur due to the congestion of the radio base station, and it can be guaranteed that the service is accessed normally.

Fig. 6 is an exemplary flow chart of ECN detection of uplink data in the related technologies. As shown in Fig. 6, UE A sends data to UE B in a high rate. The IP packet header ECN flag bit of the data is set to be ECT(0) (i.e., no congestion). When the packet passes through radio base station A, if the congestion occurs in radio base station A, the radio base station A sets the ECN flag bit of the packet to be ECN-CE (i.e., congestion occurs). After UE B detects the ECN-CE value, it judges that congestion occurs in the uplink path of base station, and sends a rate adjustment request message of decreasing the rate to UE A. After receiving the rate adjustment request message, UE A will send data in a low rate.

It can be seen from the related technologies shown in Fig. 5 and Fig. 6, although the network congestion condition may be relieved to some extent, no specific implementation solution about how the PCRF obtains network loads is provided. In this way, it is very difficult to avoid further aggravation of loads of the network when congestion occurs in the network, and thus affecting the QoS seriously.

In the disclosure, to obtain network loads, an LDF is introduced to detect the congestion indication bit in the user plane data in the radio communication system and to notify the PCRF with the current load condition.

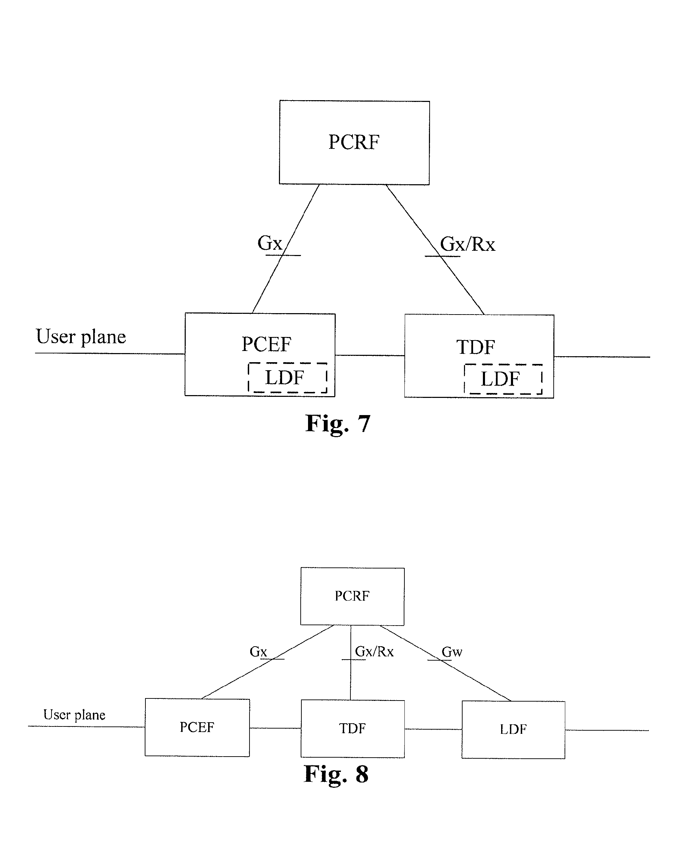

The LDF may be implemented by a plurality of architectures. Fig. 7 is an architecture diagram of a system for obtaining network loads according to the first embodiment of the disclosure. As shown in Fig. 7, the LDF serves as a function subset of the PCEF or TDF. That is, the PCEF or TDF performs function enhancement to support the network load detection and reporting functions. In the above, the PCEF and the TDF may be integrated, and also may be set separately. Fig. 8 is an architecture diagram of a system for obtaining network loads according to the second embodiment of the disclosure. As shown in Fig. 8, the LDF serves as an independent logic function. When deploying the LDF, it may be separated from the PCEF or TDF, and also may be integrated with the PCEF or TDF.

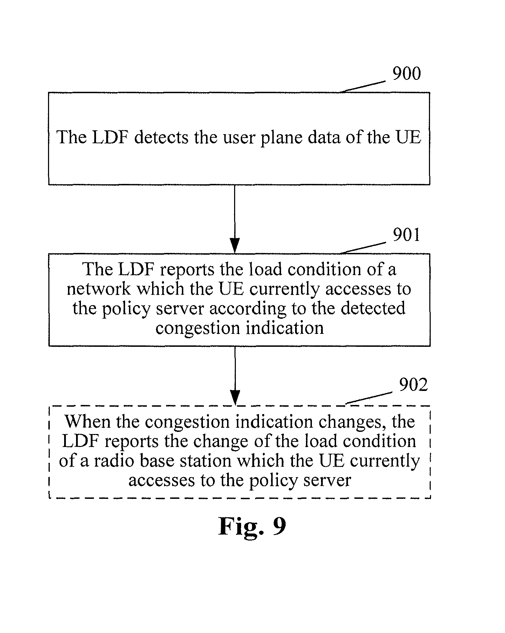

Fig. 9 is a flow chart of a method for obtaining network loads according to the disclosure. As shown in Fig. 9, the method in the disclosure mainly comprises the following steps.

Step 900: The LDF detects the user plane data of the UE.

During the transmission of the user data from the UE shown in Fig. 3 and Fig. 4, the base station may carry a congestion indication in the user data indicating that congestion occurs in the base station, and transmit the congestion indication to the LDF through the gateway. Alternatively, the UE sends a congestion indication indicating that congestion occurs in the base station to the LDF as user data. The LDF analyzes the received user data to know whether a congestion indication is carried therein.

The congestion indication may be carried in the data payload, and/or internal IP packet header, and/or GPRS Tunnel Protocol (GTP) header, and/or external IP packet header shown in Fig. 4.

Step 901: The LDF reports the load condition of a network which the UE currently accesses to the policy server according to the detected congestion indication.

The LDF may send a load reporting message to the policy server and carry a congestion indication in the load reporting message. If the congestion indication is marked as uplink congestion, the policy server knows that the load condition of the network which the user equipment currently accesses is that: congestion occurs in uplink of the base station which the user equipment currently accesses. If the congestion indication is marked as downlink congestion, the policy server knows that the load condition of the network which the user equipment currently accesses is that: congestion occurs in downlink of the base station which the user equipment currently accesses. If the congestion indication is marked as congestion both in uplink and downlink, the policy server knows that the load condition of the network which the user equipment currently accesses is that: congestion occurs both in uplink and downlink of the base station which the user equipment currently accesses.

The method in the disclosure further comprises Step 902: when the congestion indication changes, the LDF reports the change of the load condition of a radio base station which the UE currently accesses to the policy server.

When the loads of the network are relieved, for example, when congestion in a certain direction or in two directions is released, the base station will not carry a congestion indication in the user data any more. If the uplink congestion is released, uplink congestion will not be marked any more. If the downlink congestion is released, downlink congestion will not be marked any more. If both uplink congestion and downlink congestion are released, uplink congestion or downlink congestion will not be marked any more. The LDF analyzes the received user data to know that the congestion of the base station which the UE currently accesses is released in a certain direction or two directions.

Furthermore, when the downlink congestion is released, the UE sends a congestion release indication to the LDF as user data. The LDF analyzes the received user data to know that the congestion of the base station which the UE currently accesses is released in downlink direction.

At this point, the LDF may send a load reporting message to the policy server and carry a congestion release indication in the load reporting message. If the congestion release indication is marked as uplink congestion release, the policy server knows that the load condition of a network which the UE currently accesses is that: the uplink congestion of the base station which the UE currently accesses is released. If the congestion release indication is marked as downlink congestion release, the policy server knows that the load condition of a network which the UE currently accesses is that: the downlink congestion of the base station which the UE currently accesses is released. If the congestion release indication is marked as congestion release both in uplink and downlink, the policy server knows that the load condition of a network which the UE currently accesses is that: both the uplink and downlink congestion of the base station which the UE currently accesses are released. Similarly, the congestion release indication may be carried in the data payload, and/or internal IP packet header, and/or GPRS Tunnel Protocol (GTP) header, and/or external IP packet header shown in Fig. 4. The detailed description of the congestion indication below can be a reference of the specific implementation of the congestion release indication.

Further, after knowing the load condition of the radio base station which the UE currently accesses, the policy server feeds back an acknowledgement message to the LDF.

According to the related technologies, the PCEF located in the P-GW or GGSN may obtain the base station identifier information of the radio base station (eNodeB or NodeB) to which the UE currently accesses. Therefore, the method in the disclosure further comprises: when the PCEF detects that the user plane data sent by certain UE carries a congestion indication, if the LDF is located in the PCEF or the LDF is integrated with the PCEF, when the LDF reports a congestion indication to the PCRF, the PCEF simultaneously carries the base station identifier information of the radio base station which the UE currently accesses. In this way, for other UEs accessing the same radio base station, when the congestion condition of the radio base station does not change, the LDF will not need to report the congestion condition of the base station to the PCRF any more. Correspondingly, when the LDF detects that the congestion indication of the user plane data of a certain UE accessing the radio base station is released, the LDF reports the identifier information of the radio base station when the congestion is released to the PCRF, and the PCRF can also know that the congestion of the radio base station is released.

A system for obtaining network loads is further provided based on the method of the disclosure. The system mainly comprises a UE, an LDF and a policy server, wherein
the LDF is configured to detect the user plane data of the UE, and report the load condition of the radio base station which the UE currently accesses to a policy server according to the detected congestion indication; and is further configured to report the change of the load condition of a network which the UE currently accesses to the policy server; and
the policy server is configured to receive information reported by the LDF to know the load condition of a radio base station which the UE currently accesses.

The policy server is further configured to, after knowing the load condition of the radio base station which the UE currently accesses, feed back an acknowledgement message to the LDF.

The system further comprises a base station and a gateway, wherein
the UE is configured to transmit a signaling indicating that congestion occurs in downlink of the radio base station which the UE currently accesses to an corresponding end of communication;
the base station is configured to, during the transmission of the service data from the user, carry a congestion indication in the user data indicating that congestion occurs in the base station, and transmit the congestion indication to the LDF through the gateway; and
the gateway is configured to transmit and process user data between the base station and the LDF. In an EPS, the gateway comprises an S-GW and a P-GW, and the policy server is a PCRF; and in a UMTS, the gateway comprises an SGSN and a GGSN, and the policy server is a PCRF.

The LDF is located in the PCEF as a function enhancement of the PCEF; or, the LDF is located in a TDF as a function enhancement of the TDF; or, the LDF is an independent functional entity.

The method of the disclosure will be described hereinafter in detail in conjunction with several embodiments.

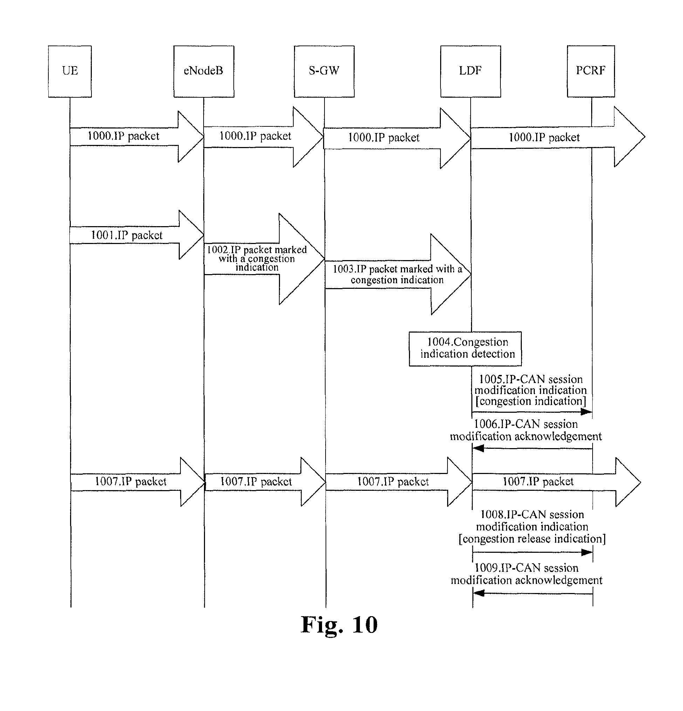

Fig. 10 is a flow diagram of an embodiment of a method for obtaining network loads according to the disclosure. In the embodiment, EPS is taken as example. After establishing an IP-CAN through an attachment flow or PDN connection request flow (that is, the UE further establishes another PDN connection after attaching), the UE accesses the service through the IP-CAN session. In the embodiment, the LDF is located in the PCEF, or the LDF is integrated with the PCEF. As shown in Fig. 10, the method comprises the following steps.

Step 1000: The UE sends an uplink IP packet to the eNodeB. The eNodeB encapsulates the IP packet in the S1 GTP-U established by the eNodeB and the S-GW for transmitting the IP packet, and then sends the IP packet to the S-GW. The S-GW decapsulates the IP packet from the S1 GTP-U, and encapsulates it in the S5/S8 GTP-U established by the S-GW and the P-GW for transmitting the IP packet, and then sends the IP packet to the P-GW. The P-GW decapsulates the IP packet from the S5/S8 GTP-U, and performs routing according to the destination address in the IP packet header of the IP packet.

Step 1001: The UE continues to send uplink IP packets to the eNodeB.

Step 1002: At this point, it is assumed that congestion occurs in the eNodeB. After marking the packet header of the IP packet with a congestion indication (that is, marking a congestion indication in the internal IP packet header shown in Fig. 3), the eNodeB encapsulates the IP data marked with the congestion indication in the S1 GTP-U established by the eNodeB and the S-GW to send it to the S-GW.

In this step, if congestion occurs in uplink of the eNodeB, the congestion indication is marked as uplink congestion. If congestion occurs in downlink of the eNodeB, the congestion indication is marked as downlink congestion. If congestion occurs both in uplink and downlink of the eNodeB simultaneously, the congestion indication is marked as congestion both in uplink and downlink.

Step 1003: The S-GW decapsulates the IP packet marked with the congestion indication from the S1 GTP-U, and then encapsulates it in the S5/S8 GTP-U established by the S-GW and the P-GW to send it to the P-GW.

Step 1004: The P-GW decapsulates the IP packet marked with the congestion indication from the S5/S8 GTP-U.

Step 1005: If the LDF is located in the PCEF in the P-GW or integrated with the PCEF, the LDF knows that congestion occurs in the eNodeB which the UE currently accesses according to the congestion indication carried in the IP packet (i.e., the congestion indication bit in the internal IP packet header shown in Fig. 3). The PCEF sends an IP-CAN session modification indication message that carries the congestion indication to the PCRF, or the LDF sends a load reporting message that carries the congestion indication to the PCRF. If the congestion indication is marked as uplink congestion, the PCRF knows that congestion occurs in uplink of the eNodeB which the UE currently accesses. If the congestion indication is marked as downlink congestion, the PCRF knows that congestion occurs in downlink of the eNodeB which the UE currently accesses. If the congestion indication is marked as congestion both in uplink and downlink simultaneously, the PCRF knows that congestion occurs both in uplink and downlink of the eNodeB which the UE currently accesses.

Step 1006: After knowing the congestion condition, the PCRF feeds back an acknowledgement message to the PCEF or LDF.

Step 1007: After some time, assuming that the loads of the eNodeB are relieved, the congestion in a certain direction or two directions is released. The eNodeB will not mark any congestion indication in the IP packet header (i.e., the internal IP packet header in Fig. 3) any more. If the uplink congestion is released, uplink congestion will not be marked any more. If the downlink congestion is released, downlink congestion will not be marked any more. If both uplink congestion and downlink congestion are released, uplink congestion or downlink congestion will not be marked any more.

Step 1008: The LDF knows that the congestion of the eNodeB which the UE currently accesses is released in a certain direction or two directions according to the change of the congestion indication in the IP packet. The PCEF located in the P-GW sends an IP-CAN session modification indication to the PCRF and carries a congestion release indication in it to notify the UE that the congestion of the eNodeB which the UE currently accesses is released in a certain direction or two directions; or, the LDF sends a load reporting message to the PCRF and carries a congestion release indication in it to notify the UE that the congestion of the eNodeB which the UE currently accesses is released in a certain direction or two directions.

Step 1009: After knowing that the congestion of the eNodeB is released, the PCRF feeds back an acknowledgement message to the PCEF or LDF.

If the LDF is located in the TDF, or the LDF is set separately from the PCEF, then in Step 1004, after decapsulating the IP packet, the P-GW forwards the IP packet to the TDF or LDF. Then, the LDF knows that congestion occurs in the eNodeB which the UE currently accesses according to the congestion indication carried in the IP packet (i.e., the congestion indication bit in the internal IP packet header in Fig. 3). The TDF or LDF sends a load reporting message carrying the congestion indication to the PCRF to notify the PCRF with the load condition. The congestion release process is similar to the description above.

Fig. 10 is described by taking EPS as example. For a UMTS, the specific implementation flow is consistent with that in Fig. 10, except that some corresponding entities are different: the eNodeB should be NodeB, the S-GW should be SGSN, the P-GW should be GGSN, the PCEF is located in the GGSN, and the LDF may be located in the PCEF in the GGSN and also may be integrated with or separately from the PCEF. In addition, between the NodeB and the SGSN, information is forwarded through a Radio Network Controller (RNC).

In the embodiment shown in Fig. 10, the congestion indication is carried in the internal IP packet header. In addition, the congestion indication also may be carried in the header of the S1 GTP-U. Still take the EPS as example, in this case, some steps in Fig. 10 will change. The specific change is as follows.

Step 1002 should be Step 1002': at this point, it is assumed that congestion occurs in the eNodeB. The eNodeB encapsulates the IP packet in the S1 GTP-U established by the eNodeB and the S-GW to send it to the S-GW, and marks a congestion indication in the header of the S1 GTP-U. In this step, if congestion occurs in uplink of the eNodeB, the congestion indication is marked as uplink congestion. If congestion occurs in downlink of the eNodeB, the congestion indication is marked as downlink congestion. If congestion occurs both in uplink and downlink of the eNodeB simultaneously, the congestion indication is marked as congestion both in uplink and downlink.

Step 1003 should be Step 1003': The S-GW decapsulates the IP packet from the S1 GTP-U, and then encapsulates it in the S5/S8 GTP-U established by the S-GW and the P-GW to send it to the P-GW. As the header of the GTP-U established by the eNodeB and the S-GW is marked with a congestion indication, the S-GW marks a same congestion indication in the header of the GTP-U established by the S-GW and the P-GW.

Step 1004 should be Step 1004': The P-GW decapsulates the IP packet from the S5/S8 GTP-U. The LDF in the PCEF or the LDF that is integrated with the PCEF knows that congestion occurs in the eNodeB which the UE currently accesses according to the congestion indication in the S5/S8 GTP-U header.

Step 1007 should be Step 1007': After some time, assuming that the loads of the eNodeB are relieved, the congestion in a certain direction or two directions is released. The eNodeB will not mark any congestion indication in the header of the S1 GTP-U, and the S-GW will not mark same congestion indication in the header of the GTP-U established by the S-GW and the P-GW.

In addition, the congestion indication also may be carried in the external IP packet header. Still taking the EPS as example, the implementation of the method mainly comprises: the eNodeB marking a congestion indication in the IP packet header (see Fig. 3) of the eNodeB and the S-GW. Similarly, if congestion occurs in uplink of the eNodeB, the congestion indication is marked as uplink congestion. If congestion occurs in downlink of the eNodeB, the congestion indication is marked as downlink congestion. If congestion occurs both in uplink and downlink of the eNodeB simultaneously, the congestion indication is marked as congestion both in uplink and downlink. The S-GW similarly marks a corresponding congestion indication in the external IP packet header established by the S-GW and the P-GW. The LDF located in the PCEF of the P-GW or the LDF that is integrated with the PCEF reports the congestion condition of the radio base station which the UE currently accesses to the PCRF. The specific implementation flow is similar to the operation of carrying the congestion indication in the header of the S1 GTP-U. Those skilled in the art can easily obtain the specific implementation flow, and thus it will not be described in detail herein.

In description of the disclosure above, the congestion indication is carried in a same part of the user data, such as the internal IP packet header, or GTP header, or external IP packet header. Similarly, the congestion indication also may be respectively marked in different parts of the user data according to the condition of the congestion indication, i.e., uplink congestion and downlink congestion. For example: the congestion indication for identifying the uplink congestion is carried in the internal IP packet header; and the congestion indication for identifying the downlink congestion is carried in the S1 GTP-U packet header or the external IP packet header. If the congestion indication is carried both in the internal IP packet header and the S1 GTP-U packet header or the external IP packet header, it is indicated that congestion occurs both in uplink and downlink. The implementation mainly comprises the following processing.

When the eNodeB sends data to the S-GW, a congestion indication is set in the internal IP packet header to identify the uplink congestion, and a congestion indication is set in the S1 GTP-U packet header or the external IP packet header to identify the downlink congestion. When a congestion indication is set both in the internal IP packet header and the S1 GTP-U packet header or the external IP packet header, it is indicated that congestion occurs both in uplink and downlink. The S-GW decapsulates the IP packet from the S1 GTP-U packet, and then encapsulates it in the S5/S8 GTP-U established by the S-GW and the P-GW. At this point, if the S1 GTP-U packet header or the external IP packet header sent by the eNodeB carries a congestion indication, the S-GW also sets a same congestion indication in the S5/S8 GTP-U packet header or the external IP packet header sent by the S-GW to the P-GW. The P-GW detects the packet sent by the S-GW. If only the S5/S8 GTP-U packet header or the external IP packet header carries a congestion indication, the LDF located in the PCEF of the P-GW or the LDF that is integrated with the PCEF indicates to the PCRF that the radio base station which the UE currently accesses is congested in downlink; if only the internal IP packet header carries a congestion indication, the LDF located in the PCEF of the P-GW or the LDF that is integrated with the PCEF or the LDF that is set separately from the PCEF or the LDF located in the TDF indicates to the PCRF that congestion occurs in uplink of the radio base station which the UE currently accesses. If both the internal IP packet header and the S1 GTP-U packet header or the external IP packet header carry a congestion indication, the LDF (in this case, the LDF may be located in different positions) indicates to the PCRF that the radio base station which the UE currently accesses is congested both in uplink and downlink.

In addition, by utilizing features that protocols in the related technologies, such as the TCP, SCTP and RTCP, support the ECN mechanism, when the UE receives the congestion indication that is set in the internal IP packet header of the downlink data, the UE will send a specific signaling of the TCP, SCTP or RTCP to notify the corresponding end of communication that the radio base station which the UE currently accesses is congested in downlink. This signaling is the data payload in Fig. 4. Therefore, in other embodiments, by still taking the EPS as example, the method also may be implemented as follows.

When the eNodeB sends data to the S-GW, if congestion occurs in uplink of the eNodeB, a congestion indication is set in the internal IP packet header to identify the uplink congestion. The LDF located in the PCEF of the P-GW, or the LDF that is integrated with the PCEF, or the LDF that is set separately from the PCEF, or the LDF located in the TDF, judges that congestion occurs in uplink of the radio base station which the UE currently accesses according to the congestion indication set in the internal IP packet header, and notifies the PCRF that congestion occurs in uplink of the radio base station which the UE currently accesses.

When the UE receives the congestion indication set in the internal IP packet header of the downlink data, the UE sends the specific signaling of the TCP, SCTP or RTCP to notify the corresponding end of communication that congestion occurs in downlink of the radio base station which the UE currently accesses. This signaling is the data payload in Fig. 4. The LDF located in the PCEF of the P-GW, or the LDF that is integrated with the PCEF, or the LDF that is set separately from the PCEF, or the LDF located in the TDF, judges that congestion occurs in downlink of the radio base station which the UE currently accesses according to the congestion indication, i.e., the signaling of the internal IP packet data payload, and notifies the PCRF that congestion occurs in downlink of the radio base station which the UE currently accesses.

According to the related technologies, the PCEF located in the P-GW or GGSN may obtain the base station identifier information of the radio base station (eNodeB or NodeB) which the UE currently accesses. Therefore, the method in the disclosure further comprises: when the LDF detects that the user plane data sent by certain UE carries a congestion indication, if the LDF is located in the PCEF or the LDF is integrated with the PCEF, when the LDF reports a congestion indication to the PCRF, the PCEF simultaneously carries the base station identifier information of the radio base station which the UE currently accesses. In this way, for other UEs accessing the same radio base station, when the congestion condition of the radio base station does not change, the LDF will not need to report the congestion condition of the base station to the PCRF any more. Correspondingly, when the LDF detects that the congestion indication of the user plane data of certain UE accessing the radio base station is released, the LDF reports the identifier information of the radio base station carried when the congestion is released to the PCRF. And the PCRF can also know that the congestion of the radio base station is released.

Above contents are only preferred embodiments of the disclosure and should not be used for limiting the protection scope of the disclosure. Any modifications, equivalent replacements and improvements within the spirit and principle of the disclosure should be within the protection scope of the disclosure.

## Claims

1. A method for obtaining network loads, **characterized by** comprising:
a Load Detection Function (LDF) detecting user plane data of a user equipment; and
the LDF reporting load condition of a radio base station, which the user equipment currently accesses, to a policy server according to a detected congestion indication.

2. The method according to claim 1, **characterized in that** before the steps in claim 1, the method further comprises:
a base station carrying a congestion indication indicating that congestion occurs in the base station in user data to transmit the congestion indication to the LDF through a gateway, or the user equipment sending a congestion indication indicating that congestion occurs in the base station to the LDF as user data; and
the LDF detecting the user plane data of the user equipment comprises: the LDF analyzing the received user data to know whether the congestion indication is carried therein.

3. The method according to claim 2, **characterized in that** the LDF reporting load condition of a network, which the user equipment currently accesses, to the policy server comprises:
the LDF sending a load reporting message to the policy server and carrying the congestion indication in the load reporting message; and
if the congestion indication is marked as uplink congestion, the policy server knowing that the load condition of the network which the user equipment currently accesses is that: congestion occurs in uplink of the base station which the user equipment currently accesses; if the congestion indication is marked as downlink congestion, the policy server knowing that the load condition of the network which the user equipment currently accesses is that: congestion occurs in downlink of the base station which the user equipment currently accesses; and if the congestion indication is marked as congestion both in uplink and downlink, the policy server knowing that the load condition of the network which the user equipment currently accesses is that: congestion occurs both in uplink and downlink of the base station which the user equipment currently accesses.

4. The method according to any one of claims 1 to 3, **characterized in that** the congestion indication is carried in data payload, and/or internal IP packet header, and/or GPRS Tunnel Protocol (GTP) header, and/or external IP packet header of the user data.

5. The method according to claim 2, **characterized by** further comprising:
when the congestion indication changes, the LDF reporting the change of the load condition of the radio base station which the user equipment currently accesses to the policy server.

6. The method according to claim 5, **characterized in that** the LDF reporting the change of the load condition of the radio base station which the user equipment currently accesses to the policy server comprises:
the LDF sending a load reporting message to the policy server and carrying a congestion release indication in the load reporting message; and
if the congestion release indication is marked as uplink congestion release, the policy server knowing that the load condition of a network which the user equipment currently accesses is that: the uplink congestion in the base station which the user equipment currently accesses is released; if the congestion release indication is marked as downlink congestion release, the policy server knows that the load condition of a network which the user equipment currently accesses is that: the downlink congestion in the base station which the user equipment currently accesses is released; and if the congestion release indication is marked as congestion release both in uplink and downlink, the policy server knows that the load condition of a network which the user equipment currently accesses is that: both the uplink and downlink congestion in the base station which the user equipment currently accesses are released.

7. The method according to claim 3 or 6, **characterized by** further comprising: after knowing the load condition of the radio base station which the user equipment currently accesses, the policy server feeding back an acknowledgement message to the LDF.

8. The method according to claim 1, **characterized by** further comprising:
the user equipment sending a signaling to an corresponding end of communication indicating that congestion occurs in downlink of the radio base station which the user equipment currently accesses; and
the LDF judging that congestion occurs in downlink of the radio base station which the user equipment currently accesses according to a signaling of internal IP packet data payload as a congestion indication, and notifying a Policy and Charging Rules Function (PCRF) that congestion occurs in downlink of the radio base station which the user equipment currently accesses.

9. The method according to claim 8, **characterized in that** the sent signaling indicating that congestion occurs in downlink of the radio base station which the user equipment currently accesses is a signaling notification of Transmission Control Protocol (TCP), or Stream Control Transmission Protocol (SCTP) or Realtime Transport Control Protocol (RTCP).

10. The method according to claim 3, 6 or 8, **characterized in that** when the LDF reports a congestion indication or a congestion release indication to the policy server,
if the LDF is located in a Policy and Control Enforcement Function (PCEF), or if the LDF is integrated with the PCEF, then when the LDF reports the congestion indication to a PCRF, the PCEF simultaneously carries base station identifier information of the radio base station which the user equipment currently accesses; and
when the LDF reports the congestion release indication to the PCRF, the LDF carries the identifier information of the radio base station which the user equipment currently accesses.

11. The method according to claim 1, **characterized in that** the LDF is located in a PCEF as a function enhancement of the PCEF; or, the LDF is located in a Traffic Detection Function (TDF) as a function enhancement of the TDF; or, the LDF is an independent functional entity.

12. A system for obtaining network loads, **characterized by** comprising: a user equipment, a Load Detection Function (LDF) and a policy server, wherein
the LDF is configured to detect user plane data of the user equipment, and report load condition of a radio base station, which the user equipment currently accesses, to a policy server according to a detected congestion indication; and
the policy server is configured to receive information reported by the LDF to know the load condition of the radio base station which the user equipment currently accesses.

13. The system according to claim 12, **characterized in that** the LDF is further configured to report the change of the load condition of the radio base station, which the user equipment currently accesses, to the policy server.

14. The system according to claim 12 or 13, **characterized in that** the policy server is further configured to, after knowing the load condition of the radio base station which the user equipment currently accesses, feed back an acknowledgement message to the LDF.

15. The system according to claim 12 or 13, **characterized in that** the LDF is further configured to, when reporting the load condition of the radio base station which the user equipment currently accesses or the change of the load condition of the radio base station, which the user equipment currently accesses, to the policy server, simultaneously report base station identifier information of the radio base station which the user equipment currently accesses.

16. The system according to claim 15, **characterized by** further comprising a base station and a gateway, wherein
the base station is configured to, during the transmission of service data from a user, carry a congestion indication in user data indicating that congestion occurs in the base station, and transmit the congestion indication to the LDF through the gateway; and
the gateway is configured to transmit and process the user data between the base station and the LDF.

17. The system according to claim 16, **characterized in that** in an Evolved Packet System (EPS), the gateway comprises a Serving Gateway (S-GW) and a Packet Data Gateway (P-GW), and the policy server is a Policy and Charging Rules Function (PCRF); and
in a Universal Mobile Telecommunications System (UMTS), the gateway comprises a Serving GPRS Support Node (SGSN) and a Gateway GPRS Support Node (GGSN), and the policy server is a PCRF.

18. The system according to claim 16, **characterized in that** the user equipment is further configured to send a signaling indicating that congestion occurs in downlink of the radio base station, which the user equipment currently accesses, to an corresponding end of communication; and
the LDF judges that congestion occurs in downlink of the radio base station which the user equipment currently accesses according to a signaling of internal IP packet data payload as a congestion indication, and notifies a PCRF that congestion occurs in downlink of the radio base station which the user equipment currently accesses.

19. The system according to claim 18, **characterized in that** the sent signaling indicating that congestion occurs in downlink of the radio base station which the user equipment currently accesses, is a signaling notification of Transmission Control Protocol (TCP), or Stream Control Transmission Protocol (SCTP) or Realtime Transport Control Protocol (RTCP).

20. The system according to claim 12 or 18, **characterized in that** the LDF is located in a Policy and Control Enforcement Function (PCEF) as a function enhancement of the PCEF; or, the LDF is located in a Traffic Detection Function (TDF) as a function enhancement of the TDF; or, the LDF is an independent functional entity.
